# EUROPÄISCHE PATENTSCHRIFT

(11) **EP 0 676 346 B1**
(45) Veröffentlichungstag und Bekanntmachung des Hinweises auf die Patenterteilung: **17.03.1999**
(21) Anmeldenummer: 95105317.2
(22) Anmeldetag: 07.04.1995
(51) Int. Cl.: B65G 53/66, C21B 5/00

(54) **Vorrichtung zum Einstellen des Druckverlusts in einer pneumatischen Förderleitung**
Device for adjusting the pressure drop in a pneumatic transport pipe
Dispositif pour régler la perte de pression dans un tuyau de transport pneumatique

(30) Priorität: 07.04.1994 DE 9405758 U
(43) Veröffentlichungstag der Anmeldung: 11.10.1995
(73) Patentinhaber: BMH Claudius Peters AG, 21614 Buxtehude (DE)
(72) Erfinder: Hilgraf, Peter, Dipl.-Ing., D-22149 Hamburg (DE); Knorr, Günter, Dipl.-Ing., D-22339 Hamburg (DE); Schulze, Gert, D-21077 Hamburg (DE); Marwedel, Klaus, D-22115 Hamburg (DE); Thiel, Jens-Peter, Dr. Ing., D-21640 Horneburg (DE)
(74) Vertreter: Glawe, Delfs, Moll & Partner

(56) Entgegenhaltungen:
- EP-A- 0 046 287
- AT-A- 373 842
- DE-A- 2 427 889
- DE-A- 3 416 236
- GB-A- 2 080 234

## Beschreibung

Die Erfindung betrifft eine Vorrichtung zum Einstellen des Druckverlustes in einer pneumatischen Förderleitung für insbesondere staubförmiges oder feinkörniges Gut mittels einer veränderbaren Leitungsverengung.

Bei der Zuführung von Schüttgut zu einem beispielsweise chemischen Prozeß kommt es häufig auf genaue Dosierung an. Wenn das Schüttgut dem Prozeß mittels mehrerer parallel geschalteter pneumatischer Förderleitungen zugeführt wird, kann dabei der Druckverlust der einzelnen Förderleitung eine Rolle spielen. Ein Beispiel dafür bildet die Zuführung von Kohlenstaub von einer Mühle zu mehreren zusammenarbeitenden Brennern, die an unterschiedlicher Stelle eines Kessels angeordnet sind und daher über unterschiedlich lange Förderleitungen mit der Mühle verbunden sind. Um vorbestimmte Verbrennungsbedingungen einhalten zu können, ist es notwendig, allen Brennern dieselbe Kohlenstaubmenge zuteilen zu können. Wenn aber eine Förderleitung aufgrund geringerer Länge einen zu geringen Druckverlust aufweist *i.V. zu den* anderen Förderleitungen, nimmt sie einen *zu großen Anteil* der Fördermenge auf. Dies läßt sich durch Einsatz einer Blende in die kürzere Förderleitung nur mit erheblichen Nachteilen ausgleichen. Bei einer Mehrphasenströmung ist die Wirkung einer Blende unberechenbar. Nur für eine vorgegebene Leistung läßt sich mit ihrer Hilfe der Druckverlust in der kürzeren Förderleitung auf den Wert einer längeren Förderleitung einstellen; bei abweichender Förderleistung ergeben sich wieder Druckverlustunterschiede zwischen den Förderleitungen. Ferner haben Blenden den Nachteil, daß sich ihre Wirkung aufgrund von Verschleiß stark ändern kann.

*Es ist ferner bekannt (DE 34 16 236 A1), in mehreren voneinander unabhängigen Förderleitungen die Massenstromgeschwindigkeit mit Leitungsverengungen, wie Blende oder Verengungsstrecke, zu beeinflussen. Eine gegenseitige Abstimmung der Förderleitungen durch Veränderung der Leitungsverengung ist in der Entgegenhaltung nicht vorgesehen.*

*Ausgehend von dem zuletzt genannten Stand der Technik liegt der Erfindung die Aufgabe zugrunde, eine Leitungsverengung zu schaffen, deren Widerstand leicht veränderbar ist.* Die erfindungsgemäße Lösung liegt in den kennzeichnenden Merkmalen des Anspruchs 1.

Die Anpassung der erfindungsgemäßen Leitungsverengung an den gewünschten Druckverlust erfolgt durch Einstellung der Länge dieser Leitungsverengung. Der Druckverlust wird vornehmlich über die Länge dieser Verengung erzielt *Besonders vorteilhaft ist es, wenn die Leitungsverengung teleskopisch ineinander verschiebbare Rohre aufweist, so daß ohne Auswechslung des betreffenden Leitungsabschnitts die Länge der Verengung veränderbar ist, ggf. sogar während des Betriebs*. Einlauf und Auslauf der Leitungsverengung werden zweckmäßigerweise verlustarm ausgebildet, damit ihr nichtlinearer Anteil an dem durch die Verengung gebildeten Druckverlust gering bleibt und damit sich keine Wirbel und Ablagerungen bilden können. Zweckmäßigerweise liegt der Öffnungswinkel des Einlaufs und/oder Auslaufs unter 50°, vorzugsweise in der Größenordnung von 40°.

Dies hat weiter den Vorteil, daß eine Wirbelbildung an Ein- und Auslauf weitgehend vermieden wird und demzufolge auch Verschleiß wie die Ansammlung von Feststoff an diesen Stellen vermieden werden.

Die durch die erfindungsgemäße, langgestreckte Leitungsverengung erzielbare Veränderung des Druckverlusts läßt sich leicht berechnen, da sie im wesentlichen linear von der Länge der Leitungsverengung abhängt.

In dem angegebenen Beispiel einer Gruppe von Förderleitungen von einer Mühle zu einer Gruppe von Brennern zeichnet sich demnach die Anordnung dadurch aus, daß die in wenigstens einer der pneumatischen Förderleitungen vorgesehene Leitungsverengung von einem Rohrleitungsabschnitt geringeren Durchmessers gebildet ist, der in wenigstens einer der anderen Förderleitungen nicht oder mit anderer Länge vorhanden ist, wobei die Länge so gewählt ist, daß ein Druckausgleich erfolgt.

Die erfindungsgemäße Lösung hat besondere Vorteile in den durch das Beispiel belegten Fällen, in denen mehrere Förderleitungen von einer und derselben Quelle ausgehen und daher deren Druckverlust Einfluß auf den auf die einzelnen Förderleitungen entfallenden Anteil der Gesamtförderleistung hat. Es liegt jedoch auf der Hand, daß die erfindungsgemäße Lösung sich auch für solche Fälle eignet, in denen der Druckverlust einer pneumatischen Förderleitung aus anderen Gründen einstellbar sein soll.

Unter einer pneumatischen Förderleitung wird in dem vorliegenden Zusammenhang eine Förderleitung verstanden, die zur Förderung von Schüttgut von insbesondere pulvriger oder feinkörniger Natur mittels eines gasförmigen Trägermediums mit einer Dichte von 0,75 bis 3 kg/m³ bestimmt ist.

Die Erfindung wird im folgenden näher unter Bezugnahme auf die Zeichnung erläutert, die vorteilhafte Ausführungsbeispiele veranschaulicht. Es zeigen:
- Fig.1: die Anordnung der von einer Mühle zu den Brennern eines Kessels führenden Förderleitungen,
- Fig.2: eine durch Längsverschiebung teleskopischer Teile veränderbare Vorrichtung zur Einstellung des Druckverlustes.

Der Kessel 1 weist Eckenbrenner 2 auf, die über strichpunktiert angedeutete pneumatische Förderleitungen 3 von einer Mühle 4 her mit Kohlenstaub versorgt werden. Infolge der relativen Anordnung der Brenner 2 zur Mühle 4 haben die pneumatischen Förderleitungen unterschiedliche Länge und unterschiedliche Krümmungen und weisen daher einen unterschiedlichen Druckverlust auf. Wenn - wie hier meist vorausgesetzt werden kann - alle Förderleitungen 3 denselben Querschnitt aufweisen, *vergrößert sich unerwünscht der* Anteil der Förderleistung durch die kürzeren Leitungen. Die Brenner haben daher unterschiedliche Leistung, was die Einstellung vorbestimmter Verbrennungsbedingungen erschwert oder unmöglich macht. Diese ist aber Vorbedingung für die Einhaltung vorbestimmter NOₓ-Werte im Abgas. Aus diesem Grund soll der Druckverlust in den kürzeren Förderleitungen *verstellbar sein*. Dazu bedient man sich *erfindungsemäß einer* Vorrichtung zum Einstellen des Druckverlusts.

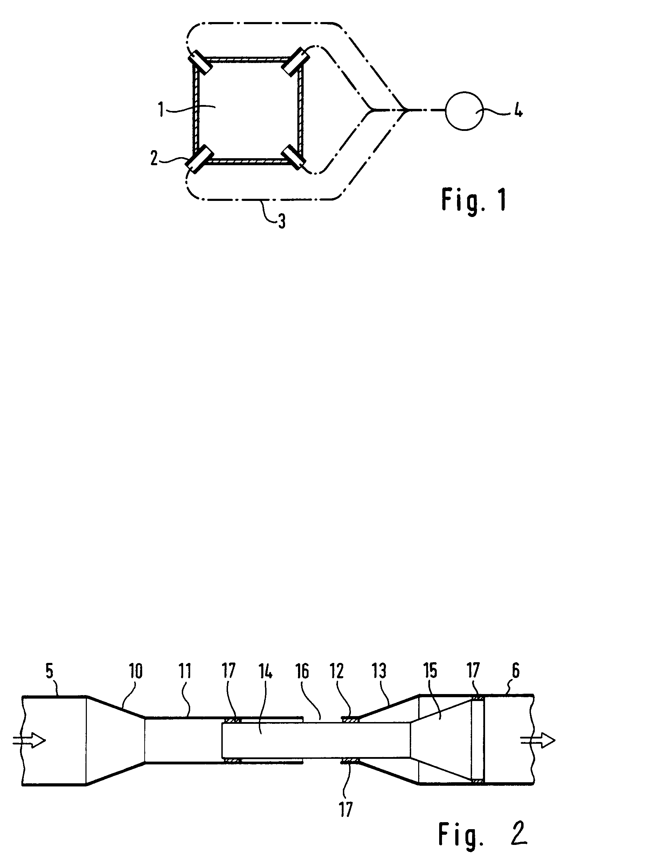

Fig.2 *zeigt ein Ausführungsbeispiel einer solchen Vorrichtung*. *Sie* ist in die Förderleitung zwischen deren zuführenden Abschnitt 5 und deren abführenden Abschnitt 6 eine Vorrichtung zur Einstellung des Druckverlustes eingeschaltet. Sie *bildet eine Verengungsstrecke, die* beträchtlich geringeren Durchmesser als die Förderleitung 5, 6 aufweist. *An den Zuführungsabschnitt 5 der Förderleitung und das konische Einlaufstück 10, dessen Einlaufwinkel in der Größenordnung von 40° liegt, schließt sich ein Rohrstück 11 geringen Querschnitts an. Daran schließt sich ein Rohrstück 12 an, das mit dem Rohrstück 11 gleichen Durchmesser aufweist und den Anschluß bildet zu einem Überleitungsstück 13, das zu dem weiterführenden Abschnitt 6 der Förderleitung überleitet. In den Rohrstücken 11, 12 ist ein Rohrstück 14 wenig geringeren Querschnitts teleskopisch längsverschieblich gelagert, das in einem Auslaufstück 15 endet, dessen Enddurchmesser wenig geringer als der des Förderleitungsabschnitts 6 ist. Zwischen den Rohrleitungsstücken 11, 12 befindet sich ein Zwischenraum 16, in welchem das Rohrstück 14 zum Zwecke seiner Verstellung unmittelbar zugänglich ist. Statt dessen könnten die Rohrstücke 11 und 12 auch unmittelbar miteinander verbunden sein, wenn irgendeine andere Einrichtung vorhanden ist,* *die zur Längseinstellung des Rohrstücks 14 geeignet ist. Zwischen dem Rohrstück 14 und den Rohrstücken 11, 12 sowie zwischen dem Endkragen des Auslaufstücks 15 und dem Innenumfang des ihn umgebenden Rohrleitungsabschnitts sind zweckmäßigerweise Dichtungen 17 angeordnet.*

Die Ein- und Auslaufabschnitte 10 *bzw. 15* sind konisch ausgeführt mit einem Öffnungswinkel Alpha in der Größenordnung von 40°. Sie gewährleisten daher, daß an diesen Stellen keine Wirbel und Ablagerungen entstehen. Außerdem werden dadurch die Ein- und Auslaufverluste vernachlässigbar gering gehalten im Verhältnis zum Druckverlust des Rohrabschnitts. Dessen Länge ist daher linear für die Höhe des erzielten Druckverlustes verantwortlich. Die Vorrichtung ist leicht berechenbar und von Fall zu Fall leicht einstellbar bzw. veränderbar.

Da in den meisten Anwendungsfällen eine einmal gewählte Einstellung unverändert erhalten bleiben kann, ist es meist nicht erforderlich, daß die Vorrichtung nach der erstmaligen Einstellung und Installation noch verändert wird. Da sie auch der Berechnung zugänglich ist, ist es in der Regel möglich, *die Längen der Rohrabschnitte von vornherein entsprechend* vorzubereiten. *Jedoch verbleibt die Möglichkeit, die Vorrichtungen nach dem Einbau anzupassen.*

Die zur Einstellung des Druckverlusts wirksame Querschnittsverengung wird von den Rohrstücken 11 und 14 gebildet. Die jeweils wirksame Länge befindet sich zwischen den Ein- und Auslaufstücken 15. Wie ersichtlich, kann diese Länge leicht durch Verschiebung des Rohrs 14 verändert werden.

## Patentansprüche

1. Vorrichtung zum Einstellen des Druckverlustes in einer pneumatischen Förderleitung für insbesondere staubförmiges oder feinkörniges Schüttgut mittels einer Verengungsstrecke, dadurch gekennzeichnet, daß die Verengungsstrecke teleskopisch ineinander verschiebbare Rohre umfaßt, deren Verengungsstrecke (11, 14) längenveränderbar ist.

2. Vorrichtung nach Anspruch 1, dadurch gekennzeichnet, daß der Einlauf (10) und/oder Auslauf (15) der Leitungsverengung verlustarm ausgeführt ist.

3. Vorrichtung nach Anspruch 2, dadurch gekennzeichnet, daß der Öffnungswinkel (Alpha) des Einlaufs (10) und/oder Auslaufs (15) unter 50° liegt.

4. Förderanordnung zwischen einer oder mehreren Kohlemühle(n) (4) und mehreren mit vorbestimmtem Leistungsverhältnis zusammenarbeitenden Brennern (2), die eine Mehrzahl pneumatischer Förderleitungen (3) gleichen Querschnitts umfaßt, die aufgrund unterschiedlicher Länge und/oder Krümmungen unterschiedlichen Druckverlust aufweisen und wenigstens teilweise eine den Druckverlustunterschied ausgleichende Leitungsverengung enthalten, dadurch gekennzeichnet, daß die Leitungsverengungen von Rohrleitungsabschnitten (11,14) unterschiedlicher Länge gebildet sind.

## Claims

1. A device for adjusting the pressure loss in a pneumatic conveying duct for, in particular, powdered or fine-grained bulk material by means of a constricted section, characterised in that the constricted section comprises pipes which can slide telescopically into one another and the constricted section of which (11,14) is variable in length.

2. A device according to Claim 1, characterised in that the inlet (10) and/or outlet (15) of the duct constriction is designed to be low loss.

3. A device according to Claim 2, characterised in that the aperture angle (alpha) of the inlet (10) and/or outlet (15) is less than 50°.

4. A conveyor arrangement between one or more coal mills (4) and a plurality of burners (2) cooperating at a predetermined power ratio, which comprises a plurality of pneumatic conveying ducts (3) of equal cross-section, which because of differing length and/or curvatures exhibit different pressure loss and include at least partly a duct constriction equalising the pressure loss difference, characterised in that the duct constrictions are formed by pipe sections (11,14) of different length.

## Revendications

1. Dispositif destiné à régler la perte de pression dans une conduite de transport pneumatique pour, en particulier, un produit en vrac pulvérulent ou à grains fins, au moyen d'un tronçon de rétrécissement, caractérisé en ce que le tronçon de rétrécissement comprend des tubes pouvant coulisser les uns dans les autres de manière télescopique, dont le tronçon de rétrécissement (11, 14) est de longueur variable.

2. Dispositif selon la revendication 1, caractérisé en ce que l'entrée (10) et/ou la sortie (15) du rétrécissement de conduite est réalisée de manière a présenter une perte réduite.

3. Dispositif selon la revendication 2, caractérisé en ce que l'angle d'ouverture (alpha) de l'entrée (10) et/ou de la sortie (15) est inférieur à 50°.

4. Dispositif de transport entre un ou plusieurs broyeurs à charbon (4) et plusieurs brûleurs (2) coopérant avec un rapport de puissance prédéterminé, qui comprend une pluralité de conduites de transport pneumatiques (3) de même section, qui en raison d'une longueur et/ou de courbures différentes présentent une perte de pression différente et contiennent au moins en partie un rétrécissement de conduite compensant la différence de perte de pression, caractérisé en ce que les rétrécissements de conduite sont formés par des tronçons de tuyauteries (11, 14) de longueurs différentes.
